(19) **Europäisches Patentamt**

**European Patent Office**

**Office européen des brevets**

(11) **EP 0 711 727 B1**

(12) **EUROPÄISCHE PATENTSCHRIFT**

(45) Veröffentlichungstag und Bekanntmachung des Hinweises auf die Patenterteilung:
**14.04.1999 Patentblatt 1999/15**

(51) Int. Cl.$^6$: **C01B 7/04**

(21) Anmeldenummer: **95117252.7**

(22) Anmeldetag: **02.11.1995**

(54) **Verfahren zur Oxidation von Chlorwasserstoff**

Process for the oxidation of hydrogen chloride

Procédé d'oxydation de gaz chlorhydrique

(84) Benannte Vertragsstaaten:
**AT BE CH DE ES FR GB IT LI NL SE**

(30) Priorität: **14.11.1994 DE 4440645**

(43) Veröffentlichungstag der Anmeldung:
**15.05.1996 Patentblatt 1996/20**

(73) Patentinhaber: **BAYER AG**
**51368 Leverkusen (DE)**

(72) Erfinder:
- **Härle, Helmut, Dr.**
  **D-51375 Leverkusen (DE)**

- **Waldmann, Helmut, Dr.**
  **D-51373 Leverkusen (DE)**
- **Dummersdorf, Hans-Ulrich, Dr.**
  **D-51399 Burscheid (DE)**
- **Minz, Franz-Rudolf, Dr.**
  **D-41542 Dormagen (DE)**
- **Gestermann, Fritz, Dr.**
  **D-51377 Leverkusen (DE)**

(56) Entgegenhaltungen:
**WO-A-91/08980**        **DE-A- 2 905 781**
**US-A- 4 107 280**      **US-A- 4 537 835**

## Beschreibung

Die vorliegende Erfindung betrifft ein verbessertes Verfahren zur Herstellung von Chlor aus Chlorwasserstoff.

Bei der technischen Anwendung von Chlor zur Herstellung von organischen Verbindungen bilden sich große Mengen an Chlorwasserstoff. So entstehen beispielsweise bei der Produktion von Isocyanaten, die als Rohstoffe für Schaumstoffe und Lacke dienen, zwischen 0,58 und 1,4 t Chlorwasserstoff pro Tonne Isocyanat. Bei der Chlorierung von Kohlenwasserstoffen, z.B. von Benzol und Toluol, entstehen ebenfalls große Mengen Chlorwasserstoff. So entsteht bei der Herstellung von Chlorbenzol pro Tonne Chlorbenzol 0,32 t Chlorwasserstoff.

Zur Entsorgung des Chlorwasserstoffs sind verschiedene Verfahren bekannt. So kann man beispielsweise den anfallenden Chlorwasserstoff nach Überführung in wäßrige Salzsäure elektrolytisch in Chlor und Wasserstoff spalten. Dieses Verfahren hat den Nachteil des hohen Bedarfs an elektrischer Energie. Man benötigt pro Tonne zu elektrolysierenden Chlorwasserstoff etwa 1600 KWh. Ein weiterer Nachteil sind die hohen Investitionskosten für die Bereitstellung der elektrischen Energie, für die Umspannung und Gleichrichtung des elektrischen Stromes und vor allem für die Elektrolysezellen.

Aus diesem Grund hat man schon versucht, die Oxidation von Chlorwasserstoff auf chemische Weise mit Sauerstoff und in Gegenwart von Katalysatoren durchzuführen. Dieses Verfahren wird in Lehrbüchern der anorganischen Chemie als "Deacon-Prozeß" bezeichnet (siehe z.B. Lehrbuch der anorganischen Chemie, Hollemann-Wiberg, 40.-46. Auflage 1958, S. 81 und 455). Der Vorteil dieses Deacon-Verfahrens besteht darin, daß für die Reaktion keine Energie von außen zugeführt werden muß. Nachteilig bei diesem Verfahren ist jedoch, daß die Reaktion nur bis zu einer Gleichgewichtseinstellung durchgeführt werden kann. Es muß daher nach Durchführung des Deacon-Verfahrens immer ein Gemisch aufgetrennt werden, das noch Chlorwasserstoff und Sauerstoff enthält.

Man hat auch schon versucht, diesen grundsätzlichen Nachteil des Deacon-Verfahrens durch eine Arbeitsweise in zwei Stufen zu beheben. Es ist z.B. beschrieben, Katalysatorsysteme zu verwenden, beispielsweise Cu(I)-Salze (siehe US-PS'en 4 119 705, 2 418 931, 2 418 930 und 2 447 323) oder Vanadiumoxide (siehe US-PS 4 107 280), die in der Lage sind, Sauerstoff und Chlorwasserstoff aufzunehmen und unter anderen Versuchsbedingungen, z.B. bei höherer Temperatur, wieder Chlor unter Rückbildung des ursprünglichen Katalysators abzuspalten. Der Vorteil eines derartigen Konzeptes liegt darin, daß das bei der Umsetzung von Chlorwasserstoff mit dem sauerstoffhaltigen Katalysator gebildete Reaktionswasser in der 1. Stufe abgetrennt werden kann und in der 2. Stufe hochangereichertes Chlor gebildet wird. Nachteilig bei diesem Konzept ist, daß das Katalysatorsystem zwischen den beiden Reaktionsstufen aufgeheizt und abgekühlt und gegebenenfalls von einer Reaktionszone in die andere transportiert werden muß. In Verbindung mit der relativ geringen Sauerstoffabgabefähigkeit der verwendeten Katalysatoren - z.B. kann 1 t Vanadiumoxid-Schmelze nur etwa 10 kg Sauerstoff abgeben - bedeutet dies einen erheblichen technischen Aufwand, der einen großen Teil der Vorteile des Deacon-Verfahrens aufzehrt.

Die bisher vorliegenden Konzepte zur technischen Realisierung des Deacon-Verfahrens in einer einstufigen Reaktion sind unbefriedigend. Der von Deacon im 19. Jahrhundert gemachte Vorschlag, einen Festbettreaktor mit einem Kupfer enthaltenden Katalysator mit Luft als Oxidationsmittel zu verwenden, liefert nur sehr verdünntes, unreines Chlor, das allenfalls zur Herstellung von Chlorbleichlauge verwendet werden kann (siehe Chem. Eng. Progr. 44, 657 (1948)).

Eine verbesserte Technik wurde mit dem sogenannten "Oppauer-Verfahren" entwickelt (siehe DE 857 633). Dabei verwendet man beispielsweise ein Gemisch aus Eisen(III)-chlorid und Kaliumchlorid, das als Schmelze bei Temperaturen von ca. 450°C als Reaktionsmedium und Katalysator dient. Als Reaktor verwendet man einen mit keramischem Material ausgemauerten Turm mit einem zentral eingebauten Innenrohr, so daß durch Einleiten der Eduktgase Chlorwasserstoff und Sauerstoff ein Zirkulieren der geschmolzenen Salze bewirkt wird.

Von außerordentlichem Nachteil bei diesem Konzept ist jedoch die sehr geringe Raum-Zeit-Ausbeute (etwa 15 g Chlor pro Liter Schmelze und pro Stunde). Deswegen ist das Oppauer-Verfahren gegenüber der Chlorwasserstoff-Elektrolyse nicht vorteilhaft.

Die schlechte Raum-Zeit-Ausbeute zieht eine große Zahl weiterer Nachteile nach sich, wie große Standvolumina an geschmolzenen Salzen, große Apparatevolumina mit entsprechend hohen Investitionskosten und eine kostenintensive Instandhaltung. Darüber hinaus lassen sich solche großen Schmelzvolumina bezüglich der Temperaturhaltung, der Aufheizung und beim Abstellen der Anlage thermisch nur sehr schlecht beherrschen, was durch die thermische Trägheit der großen Reaktoren noch verstärkt wird.

Um diese Nachteile zu vermeiden hat man vorgeschlagen, die Reaktion bei geringerer Temperatur durchzuführen, z.B. unter 400°C. Bei diesen Temperaturen besteht aber die Möglichkeit der Feststoffabscheidung aus der Kupfersalzschmelze. Man hat deshalb die Salzschmelze auf einem stückigen inerten Träger, z.B. Kieselsäure oder Aluminiumoxid, angebracht und die Reaktion in der Wirbelschicht durchgeführt (siehe GB-PS 908 022). Ein neuer Vorschlag empfiehlt Chrom enthaltende Katalysatoren auf inerten Trägern, wobei ebenfalls eine Temperatur unter 400°C gewählt wird (siehe EP-A 184 413).

Bei allen diesen Vorschlägen, die Probleme des Deacon-Verfahrens mit Hilfe der Wirbelschicht-Technik zu lösen, ist die unbefriedigende Stabilität der Katalysatoren und deren sehr aufwendige Entsorgung nach der Desaktivierung sehr nachteilig. Ferner bereitet der bei der Wirbelschicht-Technik nicht zu vermeidende Feinstaub Probleme bei seiner Abtrennung aus den Reaktionsgemischen. Überdies führt die wirbelnde Reaktionszone, die einen harten Katalysator benötigt, zu verstärkter Erosion, die in Verbindung mit der durch das Reaktionsgemisch hervorgerufenen Korrosion erhebliche technische Probleme erzeugt und die Verfügbarkeit einer technischen Anlage beeinträchtigt.

Ein weiterer Nachteil der Fahrweise mit geschmolzenen Salzen auf inerten Trägern, d.h. bei Temperaturen von über 400°C, besteht darin, daß eine befriedigende Reaktionsgeschwindigkeit und daraus resultierend eine gute Raum-Zeit-Ausbeute nur dann möglich ist, wenn ein relativ hoher Sauerstoffüberschuß angewendet wird. Das erfordert dann aber die Aufarbeitung des Reaktionsgemisches mit Hilfe eines Lösungsmittels, z.B. $CCl_4$ oder $S_2Cl_2$ (siehe DE-A 1 467 142).

Es stellte sich daher die Aufgabe, ein Verfahren zu finden, welches die Oxidation von Chlorwasserstoff mit Sauerstoff auf möglichst einfache Art und Weise und mit hoher Raum-Zeit-Ausbeute gestattet und welches die an sich vorteilhafte Technik der Verwendung eines Systems geschmolzener Salze als Katalysator gegenüber der Wirbelschicht-Technik für das Deacon-Verfahren nutzt und die Nachteile der bisherigen Varianten, z.B. des zweistufigen Salzschmelze-Verfahrens oder des einstufigen Oppauer-Verfahrens vermeidet. Dabei wäre es außerdem vorteilhaft, wenn mit einem geringeren Sauerstoffüberschuß gegenüber stöchiometrischen Bedingungen gearbeitet werden könnte.

Es wurde nun ein Verfahren zur Oxidation von Chlorwasserstoff mit Sauerstoff in Gegenwart einer Salzschmelze gefunden, das dadurch gekennzeichnet ist, daß die Salzschmelze Promotoren aus der Gruppe der Salze von Cer, Praseodym und Neodym enthält.

Salzschmelzen ohne Promotoren können z.B. Gemische aus Metallsalzen und schmelzpunktserniedrigenden Salzen sein. Metallsalze können für die Oxidation von Chlorwasserstoff mit Sauerstoff sowohl katalytisch aktive als auch katalytisch nicht-aktive Salze sein. In jedem Falle bewirkt der erfindungsgemäße Zusatz eines Promotors eine Erhöhung der Reaktionsgeschwindigkeit und der Raum-Zeit-Ausbeute.

Als Metallsalze können z.B. Salze der Metalle der I. bis V. Hauptgruppe und der I. bis VIII. Nebengruppe des Periodensystems der Elemente eingesetzt werden. Bevorzugt sind Salze von Aluminium, Lanthan, Titan, Zirkon, Vanadium, Niob, Chrom, Molybdän, Wolfram, Mangan, Eisen, Kobalt, Nickel, Kupfer und Zink. Besonders bevorzugt sind Salze von Vanadium, Chrom, Mangan, Eisen, Kobalt, Nickel, Kupfer und Zink. Ganz besonders bevorzugt sind Kupfersalze.

Schmelzpunktserniedrigende Salze können z.B. Salze der Metalle der I. bis III. Haupt- und Nebengruppe und der IV. bis V. Hauptgruppe des Periodensystems der Elemente sein, beispielsweise Salze von Lithium, Natrium, Kalium, Rubidium, Cäsium, Magnesium, Calcium, Strontium, Barium, Aluminium, Gallium, Indium, Thallium, Germanium, Zinn, Antimon, Bismut, Blei, Zink und Silber. Bevorzugt sind Salze von Lithium, Natrium, Kalium, Aluminium und Zink. Besonders bevorzugt sind Salze von Kalium.

Salzschmelzen ohne Promotoren sind z.B. Gemische der folgenden Art:
$LiCl/KCl$, $ZnCl_2/KCl$, $KCl/NaCl/LiCl$, $MgCl_2/KCl$, $AlCl_3/KCl$, $AlCl_3/NaCl$, $V_2O_5/K_2SO_4/K_2S_2O_7$, $CrCl_3/NaCl/KCl$, $MnCl_2/NaCl$, $MnCl_2/KCl$, $MnCl_2/KCl/NaCl$, $MnCl_2/AlCl_3$, $MnCl_2/GaCl_3$, $MnCl_2/SnCl_2$, $MnCl_2/PbCl_2$, $MnCl_2/ZnCl_2$, $FeCl_3/LiCl$, $FeCl_3/NaCl$, $FeCl_3/KCl$, $FeCl_3/CsCl$, $FeCl_3/KCl$, $FeCl_3/AlCl_3$, $FeCl_3/GaCl_3$, $FeCl_3/SnCl_4$, $FeCl_3/PbCl_2$, $FeCl_3/BiCl_3$, $FeCl_3/TiCl_4$, $FeCl_3/MoCl_5$, $FeCl_3/ZnCl_2$, $FeCl_3/NaCl/ZrCl_4$, $FeCl_3/KCl/ZrCl_4$, $FeCl_3/NaCl/WCl_4$, $CoCl_2/NaCl$, $CoCl_2/KCl$, $CoCl_2/GaCl_3$, $CoCl_2/SnCl_2$, $CoCl_2/PbCl_2$, $CoCl_2/ZnCl_2$, $CuCl/NaCl$, $CuCl/KCl$, $CuCl/RbCl$, $CuCl/CsCl$, $CuCl/AlCl_3$, $CuCl/GaCl_3$, $CuCl/InCl_3$, $CuCl/TlCl$, $CuCl/SnCl_2$, $CuCl/PbCl_2$, $CuCl/BiCl_3$, $CuCl/FeCl_3$, $CuCl/AgCl$, $CuCl/ZnCl_2$, $LaCl_3/FeCl_2/SnCl_2$, $NaCl/SnCl_2$, $FeCl_2/SnCl_2$ und $NaCl/CaCl_2$. Bevorzugt sind Gemische der Art $V_2O_5/K_2SO_4/K_2S_2O_7$, $CrCl_3/NaCl/KCl$, $MnCl_2/KCl$, $FeCl_3/KCl$ und $CuCl/KCl$. Besonders bevorzugt sind Gemische der Art $V_2O_5/K_2SO_4/K_2S_2O_7$, $FeCl_3/KCl$ und $CuCl/KCl$. Ganz besonders bevorzugt ist ein Gemisch aus KCl und CuCl.

Werden Metalloxide, z.B. $V_2O_5$, eingesetzt, wandeln sich diese bei Durchführung des erfindungsgemäßen Verfahrens in Salze um.

Erfindungsgemäß einzusetzende, Promotoren enthaltende Gemische sind z.B. Gemische der folgenden Art:
$LiCl/KCl/NdCl_3/PrCl_3$, $KCl/NaCl/LiCl/NdCl_3/PrCl_3$, $MgCl_2/KCl/NdCl_3/PrCl_3$, $MgCl_2/KCl/CeCl_3$, $AlCl_3/KCl/NdCl_3$, $AlCl_3/KCl/PrCl_3$, $AlCl_3/KCl/NdCl_3/PrCl_3$, $AlCl_3/KCl/CeCl_3$, $AlCl_3/NaCl/NdCl_3$, $AlCl_3/NaCl/PrCl_3$, $AlCl_3/NaCl/NdCl_3/PrCl_3$, $AlCl_3/NaCl/CeCl_3$, $V_2O_5/K_2SO_4/K_2S_2O_7/CeCl_3$, $V_2O_5/K_2SO_4/K_2S_2O_7/NdCl_3$, $V_2O_5/K_2SO_4/K_2S_2O_7/NdCl_3/PrCl_3$, $MnCl_2/KCl/CeCl_3$, $MnCl_2/KCl/NdCl_3/PrCl_3$, $MnCl_2/SnCl_2/CeCl_3$, $MnCl_2/SnCl_2/NdCl_3$, $MnCl_2/SnCl_2/PrCl_3$, $MnCl_2/SnCl_2/NdCl_3/PrCl_3$, $FeCl_3/KCl/NdCl_3/PrCl_3$, $CuCl/KCl/NdCl_3$, $CuCl/KCl/PrCl_3$, $CuCl/KCl/CeCl_3$, $CuCl/KCl/NdCl_3/PrCl_3$, $ZnCl_2/KCl/NdCl_3/PrCl_3$. Bevorzugt sind Gemische der Art: $FeCl_3/KCl/NdCl_3/PrCl_3$, $CuCl/KCl/NdCl_3$, $CuCl/KCl/PrCl_3$, $CuCl/KCl/CeCl_3$, $CuCl/KCl/NdCl_3/PrCl_3$, $CeCl_3/NaCl/SnCl_2$, $CeCl_3/FeCl_2/SnCl_2$ und $NdCl_3/NaCl/CaCl_2$. Besonders bevorzugt sind $CuCl/KCl/NdCl_3$, $CuCl/KCl/PrCl_3$ und $CuCl/KCl/NdCl_3/PrCl_3$-Gemische.

Die erfindungsgemäß einzusetzenden, Promotoren enthaltenden Salzschmelzen können gegebenenfalls auch mehrere Komponenten aus der Gruppe der Metallsalze, der schmelzpunktserniedrigenden Salze und/oder der Promotoren gleichzeitig enthalten.

Wenn ein Promotor auch die für schmelzpunkterniedrigende Salze gegebene Definition erfüllt, ist in diesem Fall die gesonderte Zugabe eines schmelzpunkterniedrigenden Salzes nicht unbedingt erforderlich, der Promotor übernimmt dann beide Funktionen. Es ist jedoch bevorzugt, Salzschmelzen einzusetzen, die mindestens 3 verschiedene Komponenten enthalten, wobei mindestens eine Komponente die für Metallsalze, mindestens eine Komponente die für schmelzpunkterniedrigende Salze und mindestens eine Komponente die für Promotoren gegebene Definition erfüllt.

Wenn die Metallkomponente der beschriebenen Salzschmelzenbestandteile mehrere Oxidationsstufen annehmen kann, beispielsweise Eisen, Kupfer oder Vanadium, so kann diese Metallkomponente in beliebiger Oxidationsstufe oder in beliebigen Mischungen verschiedener Oxidationsstufen eingesetzt werden. Während der Durchführung des erfindungsgemäßen Verfahrens kann sich die Oxidationsstufe ändern.

Der Anteil der im erfindungsgemäßen Verfahren verwendeten schmelzpunktserniedrigenden Salze, bezogen auf die gesamte Schmelze, kann zwischen 0 und 99 Gew.-%, bevorzugt zwischen 10 und 90 Gew.-% liegen und entspricht ganz besonders bevorzugt etwa der Zusammensetzung des eutektischen Gemischs der verwendeten Komponenten.

Die Promotoren müssen während der Umsetzung in der Salzschmelze nicht vollständig gelöst sein, jedoch ist dies bevorzugt. Ihre Konzentration in der Salzschmelze kann z.B. 0,01 bis 100 Mol-%, bevorzugt 0,1 bis 50 Mol-% und besonders bevorzugt 0,1 bis 10 Mol-% betragen, jeweils bezogen auf die gesamte Salzschmelze.

Man kann die im erfindungsgemäßen Verfahren zu verwendenden Metallsalze, schmelzpunktserniedrigenden Salze und Promotoren z.B. direkt als Salze, z.B. als Halogenide, Nitrate, Sulfate oder Pyrosulfate einsetzen. Man kann auch Vorläufer von Metallsalzen einsetzen, z.B. Metalloxide oder -hydroxide oder elementare Metalle die sich bei der Durchführung des erfindungsgemäßen Verfahrens in Metallsalze umwandeln. Bevorzugt werden Chloride eingesetzt.

Die zur Erlangung einer hohen Ausbeute erforderliche Reaktionstemperatur hängt im wesentlichen von der Aktivität der verwendeten Promotoren enthaltenden Salzschmelze ab. Sie liegt im allgemeinen zwischen Raumtemperatur und 1000°C. Bevorzugt sind Temperaturen zwischen 300°C und 600°C, besonders bevorzugt solche zwischen 350°C und 550°C.

Der Druck zur Durchführung des erfindungsgemäßen Verfahrens kann z.B. zwischen 0,1 und 50 bar liegen. Bevorzugt sind Drucke zwischen 0,5 und 10 bar, besonders bevorzugt solche zwischen 1 und 3 bar.

Die erfindungsgemäße Oxidation von Chlorwasserstoff gelingt im Prinzip mit beliebigen sauerstoffhaltigen Gasen. Bevorzugt sind jedoch Gase, die einen Sauerstoffgehalt von mehr als 90 Vol-% Sauerstoff enthalten.

Das Verhältnis von Chlorwasserstoff zu Sauerstoff kann in weiten Grenzen variiert werden. Zum Beispiel kann das molare Verhältnis von Chlorwasserstoff zu Sauerstoff zwischen 40:1 und 1:2,5 varrieren. Bevorzugt liegt dieses Verhältnis zwischen 20:1 und 1:1,25, besonders bevorzugt zwischen 8:1 und 1:0,5, ganz besonders bevorzugt zwischen 5:1 und 1:0,3.

Das erfindungsgemäße Verfahren wird vorteilhafterweise so durchgeführt, daß man die Edukte als kontinuierliche Phase in eine Reaktionszone führt und die Promotoren enthaltende Salzschmelze in der kontinuierlichen Phase dispergiert.

Unter dem Begriff Edukte versteht man das Gasgemisch aus dem zur Reaktion zu bringenden Chlorwasserstoff und Sauerstoff, das gegebenenfalls Inertgasanteile, z.B. Stickstoff, Kohlendioxid, Argon und/oder Helium sowie Verunreinigungen, z.B. Kohlenmonoxid, enthalten kann.

In der Reaktionszone vollzieht sich mit fortschreitender Reaktion ein kontinuierlicher Übergang von den Edukten zu den Produkten gemäß der Gleichung

$$4 \, HCl + O_2 \rightarrow 2 \, Cl_2 + 2 \, H_2O.$$

Das Produktgemisch enthält Chlor, Wasserdampf, gegebenenfalls Inertgasanteile und kann Verunreinigungen und nicht umgesetzte Edukte enthalten. Bei geeigneter Reaktionsführung kann durch Anwendung des erfindungsgemäßen Verfahrens das thermodynamische Gleichgewicht eingestellt, d.h. die maximal mögliche Chlorausbeute erzielt werden.

Es ist vorteilhaft, daß erfindungsgemäße Verfahren so zu führen, daß die Kontaktzeiten zwischen der kontinuierlichen und der dispergierten Phase zwischen 0,001 und 500 Sekunden, bevorzugt zwischen 0,01 und 50 Sekunden, besonders bevorzugt zwischen 0,1 und 4 Sekunden liegen.

Bevorzugt werden dabei die kontinuierliche Phase der Edukte und die Promotoren enthaltende Salzschmelze im Gegenstrom geführt.

Als Reaktionsapparate zur technischen Durchführung des erfindungsgemäßen Verfahrens kommen z.B. Kieselfilm-, Füllkörper-, Sprühturm- und Blasensäulenreaktoren in Frage. Bevorzugt sind Rieselfilmreaktoren. Das erfindungsgemäße Verfahren kann kontinuierlich, diskontinuierlich oder in Taktfahrweise durchgeführt werden.

Das erfindungsgemäße Verfahren gestattet die Oxidation von Chlorwasserstoff mit Sauerstoff oder einem Sauerstoff enthaltenden Gas in Gegenwart einer Salzschmelze mit höheren Umsätzen als gemäß dem Stand der Technik. Darüber hinaus gelingt die Umsetzung mit höheren Raum-Zeit-Ausbeuten und auf einfachere Art und Weise als gemäß dem Stand der Technik.

Das erfindungsgemäße Verfahren hat weiterhin den Vorteil, daß der Zusatz von Promotoren die Reaktionsgeschwindigkeit erhöht und dadurch Umsatz und Raum-Zeit-Ausbeute deutlich verbessert werden. Folglich können kleinere Reaktoren verwendet und die Investitionskosten gesenkt werden. Durch das kleinere zu handhabende Volumen der Salzschmelze reduzieren sich die Energieverluste, die z.B. während des Aufheizvorganges eintreten. Außerdem verkürzen sich die Anund Abfahrvorgänge.

Die Überlegenheit des erfindungsgemäßen Verfahrens gegenüber dem Stand der Technik wird durch die folgenden Beispiele erläutert.

## Beispiele

### Beispiel 1

In einem 1 l Glasreaktor, der für kleinere Ansätze modellhaft für technisch anzuwendende Reaktoren ist, wurde ein Gemisch von 318,6 g (4,27 Mol) Kaliumchlorid, 423,0 g (4,27 Mol) Kupfer(I)-chlorid, 158,1 g (0,44 Mol) Neodymchloridhexahydrat und 68,5 g (0,19 Mol) Praseodymchlorid-hexahydrat (Molverhältnis 1:1:0,1:0,045) vorgelegt und auf eine Temperatur von 450°C erhitzt. Dabei schmolz das Gemisch bei etwa 150°C und wurde zu einer nahezu schwarzen, gut rührbaren Schmelze, die ein Volumen von 415 ml einnahm. Unter Rühren leitete man dann durch eine Glasfritte 48 l/h Chlorwasserstoff und 12,6 l/h Sauerstoff (technische Qualität) kontinuierlich ein. Nach Gleichgewichtseinstellung wurde die Chlorausbeute durch Einleiten des Produktgasstromes in eine Kaliumiodidlösung und iodometrische Bestimmung mit Thiosulfat ermittelt. Die erzielte Chlorausbeute ist aus Tabelle 1 ersichtlich.

### Beispiel 2 (zum Vergleich)

In einem 1 l Glasreaktor wurde ein Gemisch aus 289,3 g (3,88 Mol) Kaliumchlorid, 768,2 g (7,76 Mol) Kupfer(I)-chlorid und 21,0 g (0,078 Mol) Eisen(III)-chlorid-hexahydrat vorgelegt und auf eine Temperatur von 450°C erwärmt. Es ergab sich eine Schmelze mit einem Volumen von 415 ml. Anschließend wurde verfahren wie in Beispiel 1. Die erzielte Chlorausbeute ist aus Tabelle 1 ersichtlich.

### Beispiel 3 (zum Vergleich)

In einem 1 l Glasreaktor wurde ein eutektisches Gemisch aus 289,3 g (3,88 Mol) Kaliumchlorid und 768,2 g (7,76 Mol) Kupfer(I)-chlorid vorgelegt und auf eine Temperatur von 450°C erwärmt. Es ergab sich eine Schmelze mit einem Volumen von 415 ml. Anschließend wurde wie in Beispiel 1 verfahren. Die erzielte Chlorausbeute ist aus Tabelle 1 ersichtlich.

Tabelle 1

| Beispiel | Chlorausbeute (% d.Th.) |
|---|---|
| 1 | 47,2 |
| 2 (Vergleich) | 46,9 |
| 3 (Vergleich) | 23,4 |

### Beispiele 4 - 8

In einem 1 l Glasreaktor wurde ein eutektisches Gemisch aus 289,3 g (3,88 Mol) Kaliumchlorid und 768,2 g (7,76 Mol) Kupfer(I)-chlorid vorgelegt und auf eine Temperatur von 450°C erwärmt. Es ergab sich eine Schmelze mit einem Volumen von 415 ml. Anschließend wurde Neodymchlorid-hexahydrat (Mengen siehe Tabelle 2) zugesetzt und wie in Beispiel 1 verfahren. Die erzielten Chlorausbeuten nach Gleichgewichtseinstellung sind aus Tabelle 2 ersichtlich.

Tabelle 2

| Beispiel | Neodymchlorid (Mol-% bzgl. Kupfer) | Reaktionstemperatur (°C) | Chlorausbeute (% d. Th.) |
|---|---|---|---|
| 4 | 1 | 480 | 45,4 |

Tabelle 2 (fortgesetzt)

| Beispiel | Neodymchlorid (Mol-% bzgl. Kupfer) | Reaktionstemperatur (°C) | Chlorausbeute (% d. Th.) |
|---|---|---|---|
| 5 | 1 | 420 | 19,1 |
| 6 | 2 | 450 | 41,1 |
| 7 | 4 | 480 | 57,1 |
| 8 | 8 | 450 | 62,3 |

**Beispiele 9 - 16** (zum Vergleich)

In einem 1 l Glasreaktor wurde ein eutektisches Gemisch aus 289,3 g (3,88 Mol) Kaliumchlorid und 768,2 g (7,76 Mol) Kupfer(I)-chlorid vorgelegt und auf eine Temperatur von 450°C erwärmt. Es ergab sich eine Schmelze mit einem Volumen von 415 ml. Anschließend wurde Eisenchlorid-trihydrat (Mengen siehe Tabelle 3) zugesetzt und wie in Beispiel 1 verfahren. Die erzielten Chlorausbeuten nach Gleichgewichtseinstellung sind aus Tabelle 3 ersichtlich.

Tabelle 3

| Beispiel | Eisenchlorid (Mol-% bzgl. Kupfer) | Reaktionstemperatur (°C) | Chlorausbeute (% d. Th.) |
|---|---|---|---|
| 9 | 0,25 | 450 | 30,0 |
| 10 | 0,5 | 450 | 32,2 |
| 11 | 1 | 420 | 21,7 |
| 12 | 1 | 390 | 14,0 |
| 13 | 2 | 420 | 30,0 |
| 14 | 4 | 450 | 39,9 |
| 15 | 16 | 450 | 42,5 |
| 16 zum Vergleich | 0 | 480 | 30,4 |

**Beispiel 17**

In einem kontinuierlich betriebenen Rieselfilmreaktor wurde pro Stunde ein auf 480°C vorgeheiztes Gasgemisch, bestehend aus 326 g Chlorwasserstoff und 71 g Sauerstoff bei 480°C in Gegenwart einer Salzschmelze, bestehend aus einem Gemisch von 1174 g Kaliumchlorid, 1001 g Kupfer(I)-chlorid, 2255 g Kupfer(II)-chlorid und 600 g Neodymchloridhydrat umgesetzt. Pro Stunde wurden 25 l Schmelze in Intervallen pneumatisch mit dem Eduktgasstrom zu ein oberhalb der Füllkörperschüttung gelegenes Vorratsgefäß gefördert, kontinuierlich auf eine mit Raschig-Ringen gefüllte Kolonne (d = 50 mm; h = 270 mm) dosiert und im Gegenstrom mit den Eduktgasen in Kontakt gebracht. Das den Reaktor verlassende Produktgasgemisch bestand stündlich aus 218 g Chlorwasserstoff, 47,2 g Sauerstoff, 104 g Chlor und 26,5 g Wasserdampf.

**Beispiel 18**

In einem kontinuierlich betriebenen Rieselfilmreaktor wurde pro Stunde ein auf 480°C vorgeheiztes Gasgemisch, bestehend aus 81,5 g Chlorwasserstoff und 17,8 g Sauerstoff bei 480°C in Gegenwart einer Salzschmelze, bestehend aus einem Gemisch von 1174 g Kaliumchlorid, 1001 g Kupfer(I)-chlorid, 2255 g Kupfer(II)-chlorid und 600 g Neodymchloridhydrat umgesetzt. Pro Stunde wurden 25 l Schmelze in Intervallen pneumatisch mit dem Eduktgasstrom zu ein oberhalb der Füllkörperschüttung gelegenes Vorratsgefäß gefördert, kontinuierlich auf eine mit Raschig-Ringen gefüllte Kolonne (d = 50 mm; h = 270 mm) dosiert und im Gegenstrom mit den Eduktgasen in Kontakt gebracht. Das den Reaktor verlassende Produktgasgemisch bestand stündlich aus 27,3 g Chlorwasserstoff, 5,9 g Sauerstoff, 52,6 g Chlor und 13,3 g Wasserdampf.

**Beispiel 19** (zum Vergleich)

In einem kontinuierlich betriebenen Rieselfilmreaktor wurde pro Stunde ein auf 480°C vorgeheiztes Gasgemisch, bestehend aus 407,5 g Chlorwasserstoff und 85,2 g Sauerstoff bei 450°C in Gegenwart einer Salzschmelze, bestehend aus einem Gemisch von 1174 g Kaliumchlorid, 1001 g Kupfer(I)-chlorid und 2255 g Kupfer(II)-chlorid umgesetzt. Pro Stunde wurden 20,6 l Schmelze in Intervallen pneumatisch mit dem Eduktgasstrom zu ein oberhalb der Füllkörperschüttung gelegenes Vorratsgefäß gefördert, kontinuierlich auf eine mit Raschig-Ringen gefüllte Kolonne (d = 50 mm; h = 270 mm) dosiert und im Gegenstrom mit den Eduktgasen in Kontakt gebracht. Das den Reaktor verlassende Produktgasgemisch bestand stündlich aus 361,7 g Chlorwasserstoff, 75,6 g Sauerstoff, 44,3 g Chlor und 11,25 g Wasserdampf.

**Patentansprüche**

1.  Verfahren zur Oxidation von Chlorwassers oft mit Sauerstoff in Gegenwart einer Salzschmelze, dadurch gekennzeichnet, daß die Salzschmelze Promotoren aus der Gruppe der Salze von Cer, Praseodym und Neodym enthält.

2.  Verfahren nach Anspruch 1, dadurch gekennzeichnet, daß die Salzschmelze ohne Promotoren ein Gemisch aus einem Metallsalz und einem schmelzpunkterniedrigenden Salz ist.

3.  Verfahren nach Anspruch 2, dadurch gekennzeichnet, daß das Metallsalz ein Salz der Metalle der I. bis V. Hauptgruppe und/oder der I. bis VIII. Nebengruppe des Periodensystems der Elemente ist.

4.  Verfahren nach Ansprüchen 2 und 3, dadurch gekennzeichnet, daß das schmelzpunkterniedrigende Salz ein Salz eines Metalls der I. bis III. Haupt- und/oder Nebengruppe und/oder der IV. bis V. Hauptgruppe des Periodensystems der Elemente ist.

5.  Verfahren nach Ansprüchen 1 bis 4, dadurch gekennzeichnet, daß man eine Salzschmelze der folgenden Art einsetzt:
    $LiCl/KCl/NdCl_3/PrCl_3$, $KCl/NaCl/LiCl/NdCl_3/PrCl_3$, $MgCl_2/KCl/NdCl_3/PrCl_3$, $MgCl_2/KCl/CeCl_3$, $AlCl_3/KCl/NdCl_3$, $AlCl_3/KCl/PrCl_3$, $AlCl_3/KCl/NdCl_3/PrCl_3$, $AlCl_3/KCl/CeCl_3$, $AlCl_3/NaCl/NdCl_3$, $AlCl_3/NaCl/PrCl_3$, $AlCl_3/NaCl/NdCl_3/PrCl_3$, $AlCl_3/NaCl/CeCl_3$, $V_2O_5/K_2SO_4/K_2S_2O_7/CeCl_3$, $V_2O_5/K_2SO_4/K_2S_2O_7/NdCl_3$, $V_2O_5/K_2SO_4/K_2S_2O_7/NdCl_3/PrCl_3$, $MnCl_2/KCl/CeCl_3$, $MnCl_2/KCl/NdCl_3/PrCl_3$, $MnCl_2/SnCl_2/CeCl_3$, $MnCl_2/SnCl_2/NdCl_3$, $MnCl_2/SnCl_2/PrCl_3$, $MnCl_2/SnCl_2/NdCl_3/PrCl_3$, $FeCl_3/KCl/NdCl_3/PrCl_3$, $CuCl/KCl/NdCl_3$, $CuCl/KCl/PrCl_3$, $CuCl/KCl/CeCl_3$, $CuCl/KCl/NdCl_3/PrCl_3$, $ZnCl_2/KCl/NdCl_3/PrCl_3$, $FeCl_3/KCl/NdCl_3/PrCl_3$, $CuCl/KCl/NdCl_3$, $CuCl/KCl/PrCl_3$, $CuCl/KCl/CeCl_3$, $CuCl/KCl/NdCl_3/PrCl_3$, $CeCl_3/NaCl/SnCl_2$, $CeCl_3/FeCl_2/SnCl_2$ und $NdCl_3/NaCl/CaCl_2$.

6.  Verfahren nach Ansprüchen 1 bis 5, dadurch gekennzeichnet, daß die Salzschmelze schmelzpunkterniedrigende Salze in einer Menge zwischen 0 und 99 Gew.-%, bezogen auf die gesamte Schmelze, und Promotoren in einer Konzentration von 0,01 bis 100 Mol-%, bezogen auf die gesamte Salzmenge, enthält.

7.  Verfahren nach Ansprüchen 1 bis 6, dadurch gekennzeichnet, daß die eingesetzten Salze als Halogenide, Nitrate, Sulfate oder Pyrosulfate oder als Vorläufer von Metallsalzen in Form von Metalloxiden, -hydroxiden oder elementaren Metallen eingesetzt werden.

8.  Verfahren nach Ansprüchen 1 bis 7, dadurch gekennzeichnet, daß man es bei Temperaturen zwischen Raumtemperatur und 1000°C durchführt.

9.  Verfahren nach Ansprüchen 1 bis 8, dadurch gekennzeichnet, daß das molare Verhältnis von Chlowasserstoff zu Sauerstoff im Eingangsgemisch zwischen 40:1 und 1:2,5 liegt.

**Claims**

1.  Process for the oxidation of hydrogen chloride with oxygen in the presence of a salt melt, characterized in that the salt melt comprises promotors from the group consisting of salts of cerium, praseodymium and neodymium.

2.  Process according to claim 1, characterized in that the salt melt without promotors is a mixture of a metal salt and a salt which lowers the melting point.

3. Process according to claim 2, characterized in that the metal salt is a salt of metals of main group I to V and/or of sub-group I to VIII of the periodic table of the elements.

4. Process according to claims 2 and 3, characterized in that the salt which lowers the melting point is a salt of a metal of main group and/or sub-group I to III and/or of main group IV to V of the periodic table of the elements.

5. Process according to claims 1 to 4, characterized in that a salt melt of the following type is employed: $LiCl/KCl/NdCl_3/PrCl_3$, $KCl/NaCl/LiCl/NdCl_3/PrCl_3$, $MgCl_2/KCl/NdCl_3/PrCl_3$, $MgCl_2/KCl/CeCl_3$, $AlCl_3/KCl/NdCl_3$, $AlCl_3/KCl/PrCl_3$, $AlCl_3/KCl/NdCl_3/PrCl_3$, $AlCl_3/KCl/CeCl_3$, $AlCl_3/NaCl/NdCl_3$, $AlCl_3/NaCl/PrCl_3$, $AlCl_3/NaCl/NdCl_3/PrCl_3$, $AlCl_3/NaCl/CeCl_3$, $V_2O_5/K_2SO_4/K_2S_2O_7/CeCl_3$, $V_2O_5/K_2SO_4/K_2S_2O_7/NdCl_3$, $V_2O_5/K_2SO_4/K_2S_2O_7/NdCl_3/PrCl_3$, $MnCl_2/KCl/CeCl_3$, $MnCl_2/KCl/NdCl_3/PrCl_3$, $MnCl_2/SnCl_2/CeCl_3$, $MnCl_2/SnCl_2/NdCl_3$, $MnCl_2/SnCl_2/PrCl_3$, $MnCl_2/SnCl_2/NdCl_3/PrCl_3$, $FeCl_3/KCl/NdCl_3/PrCl_3$, $CuCl/KCl/NdCl_3$, $CuCl/KCl/PrCl_3$, $CuCl/KCl/CeCl_3$, $CuCl/KCl/NdCl_3/PrCl_3$, $ZnCl_2/KCl/NdCl_3/PrCl_3$, $FeCl_3/KCl/NdCl_3/PrCl_3$, $CuCl/KCl/NdCl_3$, $CuCl/KCl/PrCl_3$, $CuCl/KCl/CeCl_3$, $CuCl/KCl/NdCl_3/PrCl_3$, $CeCl_3/NaCl/SnCl_2$, $CeCl_3/FeCl_2/SnCl_2$ and $NdCl_3/NaCl/CaCl_2$.

6. Process according to claims 1 to 5, characterized in that the salt melt comprises salts which lower the melting point in an amount of between 0 and 99 wt.%, based on the total melt, and promotors in a concentration of 0.01 to 100 mol%, based on the total amount of salts.

7. Process according to claims 1 to 6, characterized in that the salts employed are employed in the form of halides, nitrates, sulfates or pyrosulfates or as precursors of metal salts in the form of metal oxides or hydroxides or elemental metals.

8. Process according to claims 1 to 7, characterized in that it is carried out at temperatures between room temperature and 1,000°C.

9. Process according to claims 1 to 8, characterized in that the molar ratio of hydrogen chloride to oxygen in the starting mixture is between 40:1 and 1:2.5.

**Revendications**

1. Procédé pour l'oxydation du chlorure d'hydrogène à l'aide de l'oxygène en présence d'une masse de sels fondus, caractérisé en ce que la masse de sels fondus contient dés activateurs du groupe des sels du cérium, du praséodyme et du néodyme.

2. Procédé selon la revendication 1, caractérisé en ce que la masse de sels fondus, en l'absence des activateurs, consiste en un mélange d'un sel métallique et d'un sel abaissant les points de fusion.

3. Procédé selon la revendication 2, caractérisé en ce que le sel métallique est un sel d'un métal des groupes principaux I à V et/ou des sous groupes I à VIII de la classification périodique des éléments.

4. Procédé selon les revendications 2 et 3, caractérisé en ce que le sel abaissant les points de tusion est un sel d'un métal des groupes principaux et/ou sous groupes I à III et/ou des groupes principaux IV et V de la classification périodique des éléments.

5. Procédé selon les revendications 1 à 4, caractérisé en ce que l'on utilise une masse de sels fondus du type suivant : $LiCl/KCl/NdCl_3/PrCl_3$, $KCl/NaCl/LiCl/NdCl_3/PrCl_3$, $MgCl_2/KCl/NdCl_3/PrCl_3$, $MgCl_2/KCl/CeCl_3$, $AlCl_3/KCl/NdCl_3$, $AlCl_3/KCl/PrCl_3$, $AlCl_3/KCl/NdCl_3/PrCl_3$, $AlCl_3/KCl/CeCl_3$, $AlCl_3/NaCl/NdCl_3$, $AlCl_3/NaCl/PrCl_3$, $AlCl_3/NaCl/NdCl_3/PrCl_3$, $AlCl_3/NaCl/CeCl_3$, $V_2O_5/K_2SO_4/K_2S_2O_7/CeCl_3$, $V_2O_5/K_2SO_4/K_2S_2O_7/NdCl_3$, $V_2O_5/K_2SO_4/K_2S_2O_7/NdCl_3/PrCl_3$, $MnCl_2/KCl/CeCl_3$, $MnCl_2/KCl/NdCl_3/PrCl_3$, $MnCl_2/SnCl_2/CeCl_3$, $MnCl_2/SnCl_2/NdCl_3$, $MnCl_2/SnCl_2/PrCl_3$, $MnCl_2/SnCl_2/NdCl_3/PrCl_3$, $FeCl_3/KCl/NdCl_3/PrCl_3$, $CuCl/KCl/NdCl_3$, $CuCl/KCl/PrCl_3$, $CuCl/KCl/CeCl_3$, $CuCl/KCl/NdCl_3/PrCl_3$, $ZnCl_2/KCl/NdCl_3/PrCl_3$, $FeCl_3/KCl/NdCl_3/PrCl_3$, $CuCl/KCl/NdCl_3$, $CuCl/KCl/PrCl_3$, $CuCl/KCl/CeCl_3$, $CuCl/KCl/NdCl_3/PrCl_3$, $CeCl_3/NaCl/SnCl_2$, $CeCl_3/FeCl_2/SnCl_2$ et $NdCl_3/NaCl/CaCl_2$.

6. Procédé selon les revendications 1 à 5, caractérisé en ce que la masse de sels fondus contient les sels abaissant les points de fusion en quantité de 0 à 99 % par rapport au poids total de la masse de sels fondus et les activateurs à une concentration de 0,01 à 100 mol % par rapport à la quantité totale de sels.

7. Procédé selon les revendications 1 à 6, caractérisé en ce que les sels mis en oeuvre sont des halogénures, des nitrates, des sulfates ou des pyrosulfates ou des produits intermédiaires de la formation de sels métalliques sous la forme d'oxydes ou d'hydroxydes métalliques ou de métaux élémentaires.

8. Procédé selon les revendications 1 à 7, caractérisé en ce que l'on opère à des températures comprises entre la température ambiante et 1000°C.

9. Procédé selon les revendications 1 à 8, caractérisé en ce que, dans le mélange de départ, le rapport molaire chlorure d'hydrogène/oxygène se situe entre 40:1 et 1:2,5.